# NEUE EUROPÄISCHE PATENTSCHRIFT

(11) **EP 0 140 006 B2**
(45) Veröffentlichungstag und Bekanntmachung des Hinweises auf die Entscheidung über den Einspruch: **12.07.1995**
(45) Hinweis auf die Patenterteilung: 15.11.1989
(21) Anmeldenummer: 84110214.8
(22) Anmeldetag: 28.08.1984
(51) Int. Cl.: C09K 3/10, C09J 201/00, C08F 220/00

(54) **Unter Sauerstoffausschluss härtende Dichtmasse für Flächen- und Gewindeabdichtung**
Sealing material curing in oxygen-free conditions for surface and thread sealing
Matériau d'étanchéité dont le durcissement nécessite l'exclusion d'oxygène, pour l'étanchéification de surfaces et de filetages

(30) Priorität: 06.09.1983 DE 3332064
(43) Veröffentlichungstag der Anmeldung: 08.05.1985
(73) Patentinhaber: Piestert, Gerhard, Dr., 68723 Schwetzingen (DE)
(72) Erfinder: Piestert, Gerhard, Dr., 68723 Schwetzingen (DE)
(74) Vertreter: Abitz, Walter, Dr.-Ing.

(56) Entgegenhaltungen:
- DE-A- 2 507 068
- DE-A- 2 607 960
- FR-A- 2 514 849
- US-A- 4 039 705
- Handbuch der Kunststoffe, BASF, Ludwigshafen/Rhein, 6. Auflage, 1963, Seiten 107, 109, 129
- Technische Information Acronal 4F/Acronal 4L, BASF, Vorwort und Seite 102
- BASF Kunststoffe, 2. Auflage, Ludwigshafen/Rhein, 1968, Vorwort und Seite 102
- Produktinformation der Fa. Hercules, Rijswijk : Resin Product Data 75.001-E6, "Cellolyn 21", June 1991
- Kunststoff-Taschenbuch, 20. Ausgabe, Carl Hanser Verlag München und Wien, 1977, Seiten 217, 537, 545
- Ullmanns Encyklopädie der technischen Chemie, 4. Auflage, Bd 14, Seite 263, 1977
- Ullmanns Enzyklopädie der technichen Chemie, 4. Auflage, Bd 19, Seiten 18-19, 1980
- Römpps Chemie-Lexikon, 9. Auflage, 1990, Band 2, Seite 1105

## Beschreibung

Die Erfindung betrifft lösungsmittelfreie, unter Sauerstoffausschluß härtende Dichtmassen, die im ausgehärteten Zustand permanent klebrig sind und elastisch-plastische Eigenschaften aufweisen. Durch die Permanent-Klebrigkeit ist eine gute Adhäsion zu allen Werkstoffen auch den olefinischen Kunststoffen gegeben. Aufgrund der elastisch-plastischen Eigenschaften kann die Dichtmasse Verformungen der Substrat-Teile entsprechend nachgeben, ohne daß der Dichteffekt beeinträchtigt wird.

Es ist bekannt, daß Kleb- und Dichtmassen aus Acrylat/Methacrylat-Abmischungen mit einem freien Radikal-Bildner zur Flächen- und Gewindeabdichtung verwendet werden. Diese bekannten anaeroben Kleb- und Dichtmassen sind im ausgehärteten Zustand hart und spröde und werden darum ausschließlich auf formstabilen, metallischen Substraten verwendet Rohrverschraubungen, abgedichtet mit diesen bekannten anaeroben Abmischungen, werden undicht, wenn während oder nach der Aushärtereaktion die Gewindeteile auch nur geringfügig gegeneinander verdreht werden. Beim Lösen der Rohrverschraubung wird der Polymerkörper im Gewindezwischenraum aufgrund seiner Sprödigkeit pulverisiert. Da mit Hanf abgedichtete Rohrverschraubungen diesen Nachteil nicht haben, konnten sich die bisher bekannten anaeroben Abmischungen nicht generell durchsetzen. Als Flächenabdichtmittel kommen die bisher bekannten anaeroben Abmischungen wegen ihrer Härte und Sprödigkeit nur sehr begrenzt auf formstabilen, metallischen Substraten zur Anwendung.

Ziel dieser Erfindung ist daher, eine unter Sauerstoffausschluß härtende Dichtmasse herzustellen, die die angeführten Nachteile der Härte und Sprödigkeit nicht mehr aufweist und somit eine wesentlich erweiterte Anwendungsbreite besitzt. Es wurde überraschend gefunden, daß eine Abmischung von Acrylat/Methacrylatmonomeren mit einer bei RT noch fließfähigen permanent klebrigen Masse in einer Menge von 10 bis 80 Gew.-% sich bei der Aushärtereaktion soweit verfestigt, daß eine bei RT nicht fließende feste Abdichtung entsteht, die durch ihre Klebrigkeit guten Oberflächenkontakt auch zu adhäsiv wenig freundlichen Materialien hat und jeder Formänderung der Substrat-Teile plastisch-elastisch nachgeben kann, ohne daß dabei der Dichteffekt beeinträchtigt wird. Ohne Acrylat-Vernetzer sind die ausgehärteten Produkte bei höheren Temperaturen fließfähig. Überraschend war auch die Feststellung, daß bereits bei Zusatz von lediglich 1 Gew.-% eines difunktionellen Monomeren (Vernetzer) ein dauerklebriger Polymerkörper entsteht, der sich plastisch-elastisch verformen läßt und bei 150°C auf einer senkrecht stehenden glatten Metallfläche weder fließt noch die dauerklebrige Komponente ausschwitzt. Der Anteil an Vernetzer kann jedoch je nach Formulierung bis auf 20 Gew.-% erhöht werden, ohne daß die plastische Deformierbarkeit vollständig verloren geht.

Die mit der Erfindung erzielten Vorteile bestehen insbesondere darin, daß die ausgehärtete Dichtmasse jeder Formveränderung der Substrat-Teile plastisch-elastisch nachgeben kann und somit die Anwendung nicht mehr auf formstabile Teile begrenzt bleibt. Die erfindungsgemäße Dichtmasse läßt auch ein Verschieben bzw. Ausrichten der Substrat-Teile während und nach dem Aushärteprozeß zu.

Diese erfindungsgemäßen Dichtmassen haben einen wesentlich erweiterten Anwendungsbereich. Hiermit können auch flexible Metall-Teile, thermoplastische Kunststoffe und andere verformbare Materialien abgedichtet werden. Durch die Permanent-Klebrigkeit wird der für den Abdichteffekt erforderliche Oberflächenkontakt auch zu olefinischen Kunststoffen gewährleistet. Die permanent klebrige Komponente bewirkt zugleich daß bei plastischer Verformung die Dichtmasse nicht in sich reißt und dadurch keine Undichtigkeiten entstehen.

Erfindungsgegenstand sind die in den Patentansprüchen definierten unter Sauerstoffausschluß härtende Dichtmassen.

Als polymerisierbare Monomeren kommen z. B. in Betracht die diversen Ester der Acryl bzw. Methacrylsäure wie Methylmethacrylat, Butylmethacrylat, Hydroxyäthylmethacrylat, Butoxyäthylacrylat, Diglycerindiacrylat, aber auch die freie Acryl- bzw. Methacrylsäure, Äthylenglycoldimethacrylat, Neopentylglycoldiacrylat, Trimethylolpropantriacrylat. Der Anteil der polymerisierbaren Monomeren-Komponente bezogen auf die Gesamtabmischung beträgt 20 bis 90 Gew.-%, bevorzugt 40 bis 65 Gew.-%, wobei der polyfunktionelle Monomerenanteil je nach Anwendungsfall 0 bis 20 Gew.-% beträgt.

In die Monomerenkomponente gelöst wird die permanent klebrige Masse, die aus Verträglichkeitsgründen bevorzugt auf Acrylat-/Methacrylat-Basis beruht und einen Anteil von 10 bis 80 Gew.-% ausmacht, bevorzugt 35 bis 60 Gew.-%. Gemäß der Erfindung ist z. B. die handelsübliche, lösungsmittelfreie, permant-klebrige Acrylat-Masse Acronal 4 F der BASF geeignet. Diese Masse ist bei RT fließfähig. Verliert jedoch ihre Fließfähigkeit, sobald sie in der polymerisierten Monomerenkomponente eingebettet ist.

Die erfindungsgemäße Dichtmasse polymerisiert im Zwischenraum einer Gewindeverbindung bzw. zweier Flächen, sobald sauerstoffausschluß gegeben ist, nur durch den Metallkontakt. Als Quelle freier Radikale fungiert hierbei das Initiatorsystem, bestehend aus einer Aminkomponente wie z. B. N,N-Dimethyltoluidin, N,N-Dimethylanilin, N,N-Diäthyl-2,4-dimethylanilin, Pyrrolidin in einer Menge von 0,05 bis 1 Gew.-% (bezogen auf Gesamtabmischung), aus einem Peroxid wie z. B. Cumolhydroperoxid, Methyläthylketonhydroperoxid, Diisopropylbenzolhydroperoxid, tert.-Butylhydroperoxid in einer Menge von 0,05 bis 10 Gew.% (bezogen auf Gesamtabmischung). Durch Zusatz eines organischen Sulfimids wie z. B. Benzoesäuresulfimid in einer Menge von 0,05 bis 5 Gew.-% wird eine merkliche Beschleunigung der Aushärtung erzielt. Bei Metallkontakt bildet dieses Initiatorsystem freie Radikale, die die Polymerisation der Monomerenkomponente auslöst. Bei nichtmetallischen Substrat-Oberflächen muß eine Metall-Verbindung als Primer vor dem Auftrag der Dichtmasse appliziert werden.

Die erfindungsgemäße Dichtmasse kann weiterhin enthalten gelöste Polymere zur Viskositätseinstellung, anorganische oder organische Füllstoffe, Thixothropierungsmittel, Farbstoffe, Stabilisatoren wie z. B. Chinon- bzw. Phenol-Verbindungen zur Verbesserung der Lagerfähigkeit.

### Beispiele

Einige Beispiele (Beispiel 1, 2 und 3) sollen im Vergleich zu einem herkömmlichen System (Beispiel 4) den Erfindungsgegenstand verdeutlichen. Es wurden die nachfolgend beschriebenen Abmischungen hergestellt und die wesentlichen Eigenschaften ermittelt.

### Beispiel 1

55 g Acronal 4 F wurden mit 24 g Butoxyäthylmethacrylat, 15 g 2-Hydroxyäthylmethacrylat, 1 g Methacrylsäure, 0,5 g Benzoesäuresulfimid, 0,5 g p-Dimethyltoluidin und 4 g Cumolhydroperoxid zusammengegeben und homogenisiert

### Beispiele 2 und 3

Um den Einfluß der Verfletzerkomponente zu demonstrieren, wurde zu den o.a. Abmischungen zugegeben:
a) 2 Äthylenglykoldimethacrylat (Beispiel 2)
b) 5 Äthylenglykoldimethacrylat (Beispiel 3)

### Beispiel 4

Um den Effekt der permanent klebrigen Masse in der Abmischung aufzuzeigen, wurde zum Vergleich zu der Abmischung von Beispiel 1 anstelle von Acronal 4 F® 45 g Butoxyäthylmethacrylat und zur Viskositätserhöhung 10 g Polymethylmethacrylat-Copolymer gelöst.

### Ergebnisse

Losbrechmoment und mittleres Weiterdrehmoment wurden ermittelt an:
a) M10X20 Schrauben DIN 933-8.8 geschwärzt und Muttern M10 DIN 934 - 8 blank
b) 1,27 cm (1/2") Temperguß Rohrfittings feuerverzinkt Gewinde gemäß DIN 2999
Losbrechmoment ist der gemessene Festigkeitswert bei der ersten Relativbewegung zwischen den verschraubten Teilen. Das mittlere Weiterdrehmoment wurde berechnet aus dem Drehmoment nach 1/4, 1/2, 3/4 und 1 Umdrehung beim Lösen der Schraubverbindung. Aushärtezeit 72 h bei RT.

| Beispiele | Losbrechmoment in Nm | | mittleres Weiterdrehmoment in NM | |
|---|---|---|---|---|
| | M10 Schrauben | 1,27 cm (1/2") Rohrfitting | M10 Schrauben | 1,27 cm (1/2") Rohrfitting |
| 1 | 1 | 4 | 1 | 1 |
| 2 | 3 | 7 | 1 | 3 |
| 3 | 4 | 9 | 2 | 4 |
| 4 | 16 | 55 | 11 | 65 |

Konsistenz im ausgehärteten Zustand: Die ausgehärteten Dichtmassen von Beispiel 1, 2 und 3 sind plastischelastisch verformbar und klebrig. Die ausgehärtete Dichtmasse von Beispiel 4 wurde dagegen beim Lösen der Schraubverbindung pulverisiert.

Dichtigkeit: 1,27 cm (1/2") Temperguß Rohrfitting-Verschraubungen wurden mit den 4 beschriebenen Abmischungen abgedichtet und dabei die Rohrverschraubung mit 10 Nm angezogen. Nach 72 h wurden alle Prüfkörper mit einem Überdruck von 1,96 bar (2 atü) beaufschlagt.

Ergebnis: alle Prüfkörper waren dicht.

Danach wurden die Rohrverschraubungen um 360° gelöst und erneut auf Dichtigkeit bei einem Überdruck von 1,96 bar (2 atü) geprüft.

Ergebnis: nur die Abmischung Beispiel 4 war undicht.

Fließverhalten bei 150°C: Die in den Schraubverbindungen gehärteten Dichtmassen wurden auf eine Metall-Platte gebracht und diese senkrecht stehend in einem Trockenschrank auf 150°C erhitzt.

Ergebnis: nur der Polymerkörper aus Beispiel 1 (ohne Vernetzer) fließt bei 150°C. Der Polymerkörper aus Beispiel 2 und 3 zeigt augenscheinlich keine Ausschwitzerscheinung der permanent klebrigen Masse.

## Patentansprüche

1. Unter Sauerstoffausschluß härtende, lösungsmittelfreie Dichtmasse, bestehend aus a) einer flüssigen, polymerisierbaren Monomerenkomponente, b) einer Quelle für freie Radikale, die unter den Bedingungen der Erzeugung der Abdichtung die Polymerisation der Monomeren initiiert, und c) 10 bis 80 Gew.-%, bezogen auf das Gesamtgewicht der Dichtmasse, einer permanent klebrigen Masse, die bei Raumtemperatur noch fließfähig ist und die der reaktiven Dichtmasse im ausgehärteten Zustand Permanent-Klebrigkeit und plastisch-elastische Eigenschaften verleiht.

2. Dichtmasse nach Anspruch 1, dadurch gekennzeichnet, daß die polymerisierbare Monomerenkomponente aus einem oder mehreren Acrylat- oder Methacrylat-Monomeren besteht, die mono- oder polyfunktionell sein können.

3. Dichtmasse nach Anspruch 1 und 2, dadurch gekennzeichnet, daß die Monomerenkomponente (mono- und polyfunktionelle Monomeren zusammen) in einem Anteil von 20 bis 90 Gew.-% vorliegt, bevorzugt 40 bis 65 Gew.-%, wobei die polyfunktionellen Monomeren in einem Anteil, bezogen auf die Gesamtabmischung, von 0 bis 20 Gew.-%, vorzugsweise 1 bis 7,5 Gew.-%, vorliegen.

4. Dichtmasse nach Anspruch 1, dadurch gekennzeichnet, daß die in den Monomeren gelöste permanent klebrige Masse aus Verträglichkeitsgründen bevorzugt auf Acrylat/Methacrylat-Basis beruht und in einem Anteil, bezogen auf die Gesamtabmischung, von vorzugsweise 35 bis 60 Gew.-% vorliegt.

5. Dichtmasse nach Anspruch 1, dadurch gekennzeichnet, daß sie als Quelle für freie Radikale ein anaerobes Initiatorsystem enthält, das vorzugsweise aus einer Amin-Verbindung, Hydroperoxid und Sulfimid-Beschleuniger besteht, wobei die Masse zur Verbesserung der Lagerfähigkeit noch einen Stabilisator, vorzugsweise Chinon- oder Phenol-Verbindungen, enthalten kann.

6. Verwendung der Dichtmasse nach mindestens einem der Ansprüche 1 bis 5, dadurch gekennzeichnet, daß vor dem Auftragen der Dichtmasse auf ein nichtmetallisches Substrat (inaktive Oberfläche) ein Aktivator, vorzugsweise eine Schwermetall-Verbindung, als Primer aufgebracht wird.

## Claims

1. An anaerobically curing, solventless sealing compound consisting of a) a liquid, polymerizable monomer component, b) a source of free radicals which initiates polymerization of the monomers under the sealing conditions and c) 10 to 80% by weight, based on the total weight of the sealing compound, of a permanently tacky paste which is flowable at room temperature and which provides the reactive sealing compound with permanent tackiness and with plastic-elastic properties in its cured state.

2. A sealing compound as claimed in claim 1, characterized in that the polymerizable monomer component may consist of one or more acrylate or methacrylate monomers which may be monofunctional or polyfunctional.

3. A sealing compound as claimed in claims 1 and 2, characterized in that the monomer component (monofunctional and polyfunctional monomers together) may be present in a quantity of from 20 to 90% by weight and preferably in a quantity of from 40 to 65% by weight, the polyfunctional monomers being present in a quantity, based on the mixture as a whole, of from 0 to 20% by weight and preferably from 1 to 7.5% by weight.

4. A sealing compound as claimed in claim 1, characterized in that, for reasons of compatibility, the permanently tacky paste dissolved in the monomers is preferably based on acrylate/methacrylate and is present in a quantity, based on the mixture as a whole, of preferably from 35 to 60% by weight.

5. A sealing compound as claimed in claim 1, characterized in that it contains an anaerobic initiator system preferably consisting of an amine compound, hydroperoxide and sulfimide accelerator as the source of free radicals and may additionally contain a stabilizer, preferably a quinone or phenolic compound, to improve its stability in storage.

6. The use of the sealing compound claimed in at least one of claims 1 to 5, characterized in that an activator, preferably a heavy metal compound, is applied as primer before the sealing compound is applied to a non-metallic substrate (inactive surface).

## Revendications

1. Matériau d'étanchéité sans solvant, durcissant en l'absence d'oxygène, constitué : a) d'un composant monomère polymérisable, liquide, b) d'une source de radicaux libres qui dans les conditions de la création du joint étanche initie la polymérisation des monomères, et c) 10 à 80 % en poids, rapporté au poids total du matériau d'étanchéité, d'un produit adhésif permanent, qui communique à la masse de matériau d'étanchéité réactif à l'état durci une adhésivité permanente et des propriétés électroplastiques.

2. Matériau d'étanchéité selon la revendication 1, caractérisé en ce que le composant monomère polymérisable se compose d'un ou plusieurs acrylates ou méthacrylates monomères, qui peuvent être mono- ou polyfonctionnels.

3. Matériau d'étanchéité selon la revendication 1 ou 2, caractérisé en ce que les composants monomères (monomères mono- et polyfonctionnels ensemble) sont présents en une proportion de 20 à 90 % en poids, de préférence de 40 à 65 % en poids, les monomères polyfonctionnels étant présents en une proportion, ramenée à l'ensemble du mélange, de 0 à 20 % en poids, de préférence de 1 à 7,5 % en poids.

4. Produit d'étanchéité selon la revendication 1, caractérisé en ce que, pour des raisons de compatibilité, le produit adhésif permanent dissous dans les monomères est de préférence à base d'acrylate/méthacrylate et en ce qu'il est présent en une proportion, rapportée à l'ensemble du mélange, de préférence de 35 à 60 % en poids.

5. Produit d'étanchéité selon la revendication 1, caractérisé en ce qu'il contient, comme source de radicaux libres, un système initiateur anaérobie, qui se compose de préférence d'un composé amine, d'un hydroperoxyde et d'un sulfimide comme accélérateur, le produit pouvant en outre contenir, pour améliorer les capacités de stockage, un stabilisateur, de préférence des composés de quinone ou de phénol.

6. Emploi du produit d'étanchéité selon au moins l'une des revendications 1 à 5, caractérisé en ce qu'on ajoute, avant d'appliquer le produit d'étanchéité sur un substrat non-métallique (surface inactive), un activateur, de préférence un composé de métal lourd, comme couche de fond.
